# EUROPEAN PATENT SPECIFICATION

(11) **EP 3 174 283 B1**
(45) Date of publication and mention of the grant of the patent: **26.02.2020**
(21) Application number: 16165860.4
(22) Date of filing: 18.04.2016
(51) Int. Cl.: H04N 5/232, H04N 5/272

(54) **PREVIEW IMAGE DISPLAY METHOD AND APPARATUS, COMPUTER PROGRAM AND RECORDING MEDIUM**
VORANSICHTS-BILDANZEIGEVERFAHREN UND VORRICHTUNG, COMPUTERPROGRAMM UND AUFZEICHNUNGSMEDIUM
PROCÉDÉ D'AFFICHAGE D'IMAGE DE PRÉVISUALISATION ET APPAREIL, PROGRAMME INFORMATIQUE ET SUPPORT D'ENREGISTREMENT

(30) Priority: 30.11.2015 CN 201510853900
(43) Date of publication of application: 31.05.2017
(73) Proprietor: Xiaomi Inc., Beijing 100085 (CN)
(72) Inventor: QIN, Qiuping, 100085 Haidian District (CN); CHEN, Zhijun, 100085 Haidian District (CN); WANG, Baichao, 100085 Haidian District (CN)
(74) Representative: Loustalan, Paul William

(56) References cited:
- US-A1- 2005 046 730
- US-A1- 2008 205 869
- US-A1- 2010 149 402
- US-A1- 2015 029 347
- US-A1- 2015 296 317

## Description

### TECHNICAL FIELD

The present invention is related to communication technologies, and more particularly, to a preview image display method and apparatus, a computer program and a recording medium.

### BACKGROUND

With popularization of digital cameras and smart cell phones in recent years, shooting pictures using cameras or cell phones has become a habit for people. In particular, as mobile internet emerges in the past several years, people are more dependent on mobile terminals such as cell phones and tablet computers to record fresh things around them and share them on the internet. The appearance of selfie sticks makes selfie more convenient. People can capture selfie images from more angles using selfie sticks, and the composition methods of pictures become more diverse. Selfie sticks have swept the world in a short period of time, and have become necessary tools for people who enjoy taking selfies.

When shooting pictures using selfie sticks, in order to display the whole picture on the captured composition, users need to stretch selfie sticks further for shooting. Since there is a certain distance from a shooting device to human eyes, the visual angle of the display screen of the shooting device becomes smaller in human eyes, and it becomes harder for users to view the details of a preview image from the display screen. When selfie sticks are stretched far away, users even cannot clearly see themselves in the preview image on the display screen.

US 2008/0205869 A1 discloses an image taking apparatus, where once a mode setting device sets a person photographing mode, and the face zooming instruction device instructs zooming to the face of the person, the detection device detects the size of the face of the person captured by the image pickup device. The zooming device is then controlled so as to capture the face of the person in a certain size based on the detection result.

US 2015/0029347 A1 discloses an imaging apparatus having a subject detection function. The subject detection apparatus includes a subject detection unit configured to detect a subject included in an image, an orientation detection unit configured to detect an orientation of the subject detection apparatus, and a control unit configured to control a zoom magnification according to an area of the subject detected by the subject detection unit.

US 2015/0296317 A1 discloses an electronic device includes a capturing unit that captures an image and a mike unit that receives an audio signal while the image is captured. An object detection unit detects one or more objects from the image.

US 2010/0149402 A1 provides an imaging apparatus including an optical system to change a focus state of an image of a subject, an imaging unit to capture the image of the subject formed by the optical system and generate image data, an auto focus controller to control the optical system to focus on a partial area in the image indicated by the image data generated by the imaging unit, a manual focus changing unit to be operated manually be a user to change the focus state of the optical system, a display unit to display the image based on the image data generated by the imaging unit, and a display controller to control the display unit.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

To overcome the problems in the related arts, the present invention provides a preview image display method and apparatus, a computer program and a recording medium, wherein the invention is defined by the subject-matter according to the independent claims. Further aspects of the invention are defined according to the dependent claims.

References to embodiments which do not fall under the scope of the claims are to be understood as examples useful for understanding the invention.

As used herein, the term "consecutive " refers to the durations being in series, such that, for example, a second duration immediately, and directly, follows a first duration so that the end of the, for example, first duration runs continuously into the start of the second duration. Therefore, as used herein, the term "continuous" is synonymous with the term "consecutive".

The technical solutions of the embodiments of this invention have the following advantageous effects:
By displaying an amplified human face image, the method allows a user to clearly see his/her face details when shooting images with a selfie stick.

It should be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a preview image display method according to an exemplary embodiment;
Fig. 2 is a flow chart showing a preview image display method according to another exemplary embodiment;
Fig. 3 is a flow chart showing a preview image display method according to yet another exemplary embodiment;
Fig. 4 is a flow chart showing a preview image display method according to yet another exemplary embodiment;
Fig. 5 is a flow chart showing a preview image display method according to yet another exemplary embodiment;
Fig. 6 is a flow chart showing a preview image display method according to yet another exemplary embodiment;
Fig. 7 is a block view showing a preview image display apparatus according to an exemplary embodiment;
Fig. 8 is a block view showing a preview image display apparatus according to another exemplary embodiment;
Fig. 9 is a block view showing a preview image display apparatus according to yet another exemplary embodiment;
Fig. 10 is a block view showing a preview image display apparatus according to yet another exemplary embodiment;
Fig. 11 is a block view showing a preview image display apparatus according to yet another exemplary embodiment;
Fig. 12 is a block view showing a preview image display apparatus according to yet another exemplary embodiment;
Fig. 13 is a block view showing a preview image display apparatus according to yet another exemplary embodiment;
Fig. 14 is a block view showing a terminal device according to an exemplary embodiment;
Fig. 15 is a block view showing a terminal device according to another exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise presented. The embodiments set forth in the following description of exemplary embodiments do not represent all embodiments consistent with the invention. Instead, they are merely examples of apparatuses and methods consistent with aspects related to the invention as recited in the appended claims.

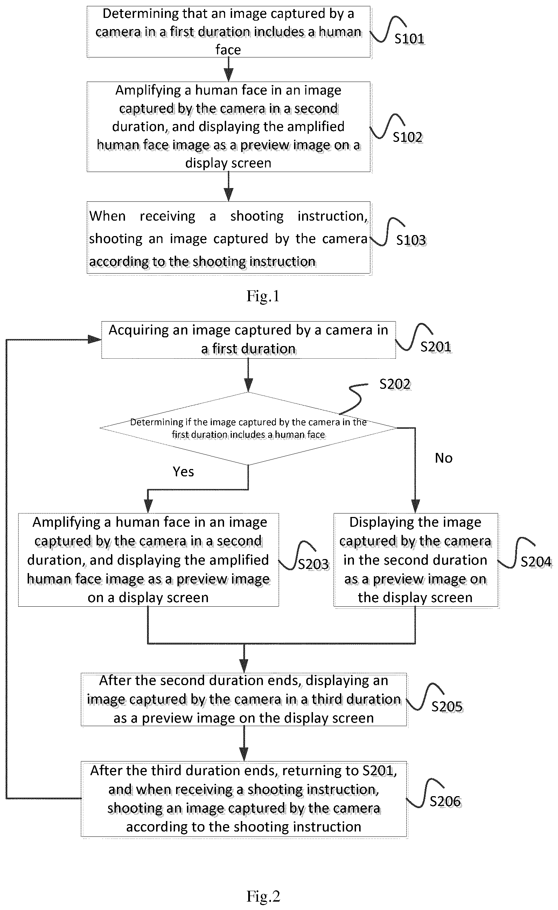

Fig. 1 is a flow chart showing a preview image display method according to an exemplary embodiment. The method is applied to a terminal device having a shooting function, which may be a smart cell phone, a digital camera or the like. As shown in Fig. 1, the preview image display method comprises the following steps.

S101: determining that an image captured by a camera in a first duration includes a human face.

The method of this embodiment is mainly used in a shooting scene using a selfie stick, and defines a preview image automatic switch mode in which a display screen alternately displays an amplified human face image and an originally captured image. After a terminal device activates a shooting function, a camera starting capturing images. At this time, the terminal device displays the captured images as preview images on a display screen, and detects if the images captured by the camera in a first duration includes a human face. The first duration may be set by humans as 1 second or 2 seconds, for example. The terminal device may use common human face recognition methods to determine if the captured images include a human face.

In this embodiment, when a user captures images using a selfie stick, the preview image automatic switch mode can be manually started, or it can be automatically started when the terminal device detects that the user uses a selfie stick. When the user captures images using a selfie stick, first the selfie stick and a cell phone need to be connected by wire or wirelessly. A wireless connection may include a Bluetooth connection, and a wired connection may include connecting the terminal device and the selfie stick using a data line. When connection is made using a data line, after the terminal device detects that a USB interface is connected, the terminal device recognizes the connected device as a selfie stick. If the connected device is recognized as a selfie stick, the preview image automatic switch mode is started. When wireless connection is used, if the terminal device determines that the connected device is a selfie stick through Bluetooth matching, the preview image automatic switch mode is started.

S102: amplifying a human face in an image captured by the camera in a second duration, and displaying the amplified human face image as a preview image on a display screen.

The camera keeps capturing images. In the second duration, the camera performs human face recognition to each frame of image captured, and the human face area is amplified to a target size after the human face area is recognized, wherein the target size can be set according to a size of the display screen of the terminal device. Finally, the amplified human face area is displayed as a preview image. The terminal device amplifies and displays the images frame by frame. The second duration is preset. The terminal device may provide several durations for the user's selection, such as 1 second, 1.5 seconds and 2 seconds. The second duration may be realized by a timer. The timed period of the timer is set as the second duration, which is continuous with the first duration.

In one scene, when detecting a human face, the terminal exits a display interface on which a complete image captured by the camera is displayed, and enters a human face amplification mode to display the amplified human face area as a main image on the full display screen. In another scene, the amplified image and the complete image may be displayed simultaneously in a picture-in-picture manner; that is, while the amplified human face area is displayed on the full display screen, the complete image captured by the camera is displayed on another preview display interface on the display screen. The preview display interface may be located at one of the four corners of the display screen, and has a size smaller than that of the display screen so as not to affect the display of the interfaces on the display screen.

The purpose of amplifying the human face in this step is to allow the user to see himself/herself clearly. During the shooting process using a selfie stick, to include the whole scenery in the layout to be captured, the terminal device may be stretched too far through the selfie stick, so that the user's face in the preview image will be very small. The embodiments of this application amplify the user's face to allow the user to clearly see his/her face.

S103: when receiving a shooting instruction, shooting an image captured by the camera according to the shooting instruction.

The user can see clearly the details of his/her face through the amplified human face image. If the user is satisfied with his/her current face image, a shooting button may be pressed for shooting before the second duration ends. If the user is not satisfied with his/her current face image, the user can adjust his/her position and/or his/her facial expressions. The display screen is configured to alternately display the amplified human face image and the original image captured by the camera so that the user can see clearly the details of his/her face, until the user is satisfied with his/her face image and presses the shooting button.

In this embodiment, when determining that an image captured by a camera in a first duration includes a human face, by amplifying a human face in an image captured by the camera in a second duration, displaying an amplified human face image as a preview image on a display screen, and when receiving a shooting instruction, shooting an image captured by the camera according to the shooting instruction, the method allows a user to clearly see the details of his/her face when shooting with a selfie stick.

Fig. 2 is a flow chart showing a preview image display method according to another exemplary embodiment. As shown in Fig. 2, the preview image display method comprises the following steps:
S201: acquiring an image captured by a camera in a first duration.
S202: determining if the image captured by the camera in the first duration includes a human face.

After the preview image automatic switch mode is started, the camera captures images. Then, whether the image captured by the camera in the first duration includes a human face is determined. If it is determined that the image captured by the camera in the first duration includes a human face, step S203 is executed. If it is determined that the image captured by the camera in the first duration does not include a human face, step S204 is executed.

S203: amplifying a human face in an image captured by the camera in a second duration, and displaying the amplified human face image as a preview image on a display screen.

S204: displaying the image captured by the camera in the second duration as a preview image on the display screen.

If it is determined that the image captured by the camera in the first duration does not include a human face, it is unnecessary to amplify the image, and the image captured by the camera in the second duration is directly displayed as a preview image on the display screen.

S205: after the second duration ends, displaying an image captured by the camera in a third duration as a preview image on the display screen.

Step S205 is executed after steps S203-S204. The terminal device determines the end of the second duration. If the second duration is realized by a timer, when the terminal device detects that the timing of the timer is reached, it is determined that the second duration ends. During this process, the camera keeps capturing images. The terminal device displays an image captured by the camera in a third duration as a preview image on the display screen. The image captured by the camera in the third duration is not amplified. The third and second durations are continuous. Optionally, the third and second durations are equal, and may not be equal of course, which will not be limited in this embodiment.

The human face in the captured image is amplified in S203 so that the user can clearly see himself/herself. After the user clearly sees himself/herself, the terminal device displays the originally captured image to the user in this step, so that the user can see the whole layout. The originally captured image is the image in which the human face is not amplified.

S206: after the third duration ends, returning to S201, and when receiving a shooting instruction, shooting an image captured by the camera according to the shooting instruction.

In this embodiment, when a shooting instruction input by the user is not received, the terminal device keeps executing steps S201-S206 in a looped manner. That is, the amplified human face image and the originally captured image are displayed in alternation. In other words, after the amplified human face image is displayed for the second duration, the originally captured image is displayed for the third duration, so that the user can clearly see himself/herself and the whole layout, until the user is satisfied with the image in the preview image and presses the shooting button. After the terminal device receives the shooting instruction, the terminal device shoots the image captured by the camera according to the shooting instruction.

The method of this embodiment comprises: determining if an image captured by a camera in a first duration includes a human face; if an image captured by a camera in a first duration includes a human face, amplifying a human face in an image captured by the camera in a second duration and displaying the amplified human face image; if an image captured by a camera in a first duration does not include a human face, directly displaying an image captured by the camera in a second duration; after determining that the second duration ends, displaying an image captured by the camera in a third duration as a preview image on the display screen; after determining that the third duration ends, repeating the above process until receiving a shooting instruction; and shooting an image captured by the camera according to the shooting instruction. By applying the above method, the amplified human face image and the originally captured image are displayed in alternation, so that the user can see clearly the whole layout and his/her face details when shooting images using a selfie stick.

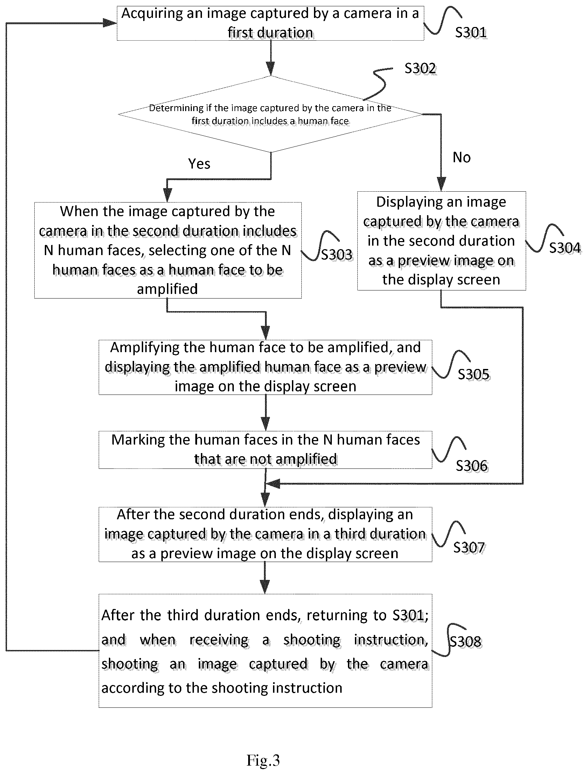

Fig. 3 is a flow chart showing a preview image display method according to yet another exemplary embodiment. As shown in Fig. 3, the preview image display method provided by this embodiment comprises the following steps:
S301: acquiring an image captured by a camera in a first duration.
S302: determining if the image captured by the camera in the first duration includes a human face.

If it is determined that the image captured by the camera in the first duration includes a human face, step S303 is executed. If it is determined that the image captured by the camera in the first duration does not include a human face, step S304 is executed.

S303: when the image captured by the camera in the second duration includes N human faces, selecting one of the N human faces as a human face to be amplified.

The image captured by the camera may include N human faces, N being a positive integer greater than or equal to 2. Then, the terminal device may select one of the N human faces as a human face to be amplified randomly or according to a preset selection rule, such as the area of the human faces. After S303, S305 is executed.

S304: displaying an image captured by the camera in the second duration as a preview image on the display screen.

After S304, S307 is executed.

S305: amplifying the human face to be amplified, and displaying the amplified human face as a preview image on the display screen.

S306: marking the human faces in the N human faces that are not amplified.

The purpose of marking is that the terminal device can select one human face from the remaining N-1 human faces that are not amplified according to the marking in the next amplification process. By using this manner, all the human faces can be amplified through N cycles, so that everyone can clearly see his/her face details. In each amplification process, the terminal device will select and amplify a human face that is not amplified according to the marking. The photo maker may take photos before the N cycles are ended.

S307: after the second duration ends, displaying an image captured by the camera in a third duration as a preview image on the display screen.

S308: after the third duration ends, returning to S301; and when receiving a shooting instruction, shooting an image captured by the camera according to the shooting instruction.

The method of this embodiment comprises: when the image captured by the camera in the second duration includes N human faces, selecting one of the N human faces as a human face to be amplified; amplifying the human face to be amplified, and displaying the amplified human face as a preview image on the display screen; marking the human faces in the N human faces that are not amplified, such that one human face is selected from the remaining N-1 human faces that are not amplified, and amplified according to the marking in the next amplification process. After N cycles, everyone in the image can clearly see the amplified details of his/her face.

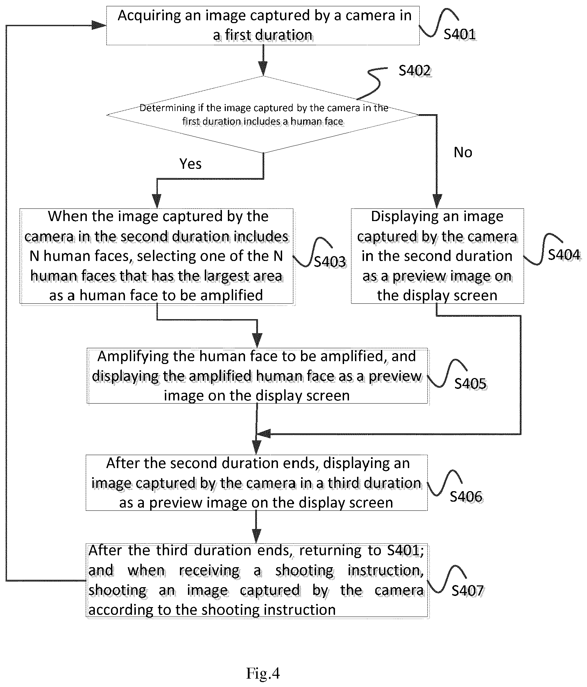

Fig. 4 is a flow chart showing a preview image display method according to yet another exemplary embodiment. As shown in Fig. 4, the preview image display method comprises the following steps:
S401: acquiring an image captured by a camera in a first duration.
S402: determining if the image captured by the camera in the first duration includes a human face.

If it is determined that the image captured by the camera in the first duration includes a human face, step 4203 is executed. If it is determined that the image captured by the camera in the first duration does not include a human face, step S404 is executed.

S403: when the image captured by the camera in the second duration includes N human faces, selecting one of the N human faces that has the largest area as a human face to be amplified.

The image captured by the camera may include N human faces, N being a positive integer greater than or equal to 2. Then, the human face that has the largest area may be selected from the N human faces as a human face to be amplified. Alternatively, the terminal device may select one of the N human faces as a human face to be amplified randomly or in other manners. After S403, S405 is executed.

S404: displaying an image captured by the camera in the second duration as a preview image on the display screen.

After S404, S406 is executed.

S405: amplifying the human face to be amplified, and displaying the amplified human face as a preview image on the display screen.

S406: after the second duration ends, displaying an image captured by the camera in a third duration as a preview image on the display screen.

S407: after the third duration ends, returning to S401; and when receiving a shooting instruction, shooting an image captured by the camera according to the shooting instruction.

The method of this embodiment comprises: when the image captured by the camera in the second duration includes N human faces, selecting one of the N human faces that has the largest area as a human face to be amplified; amplifying the human face to be amplified, and displaying the amplified human face as a preview image on the display screen. When there are many human faces, if each face is amplified, it will take a long time. By applying the method of this embodiment, the human face that has the largest area is amplified each time, so that the preview image display manner is more flexible.

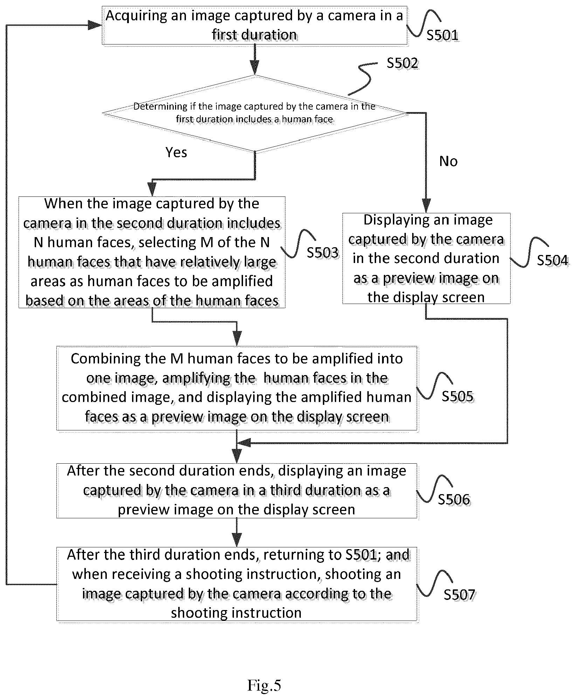

Fig. 5 is a flow chart showing a preview image display method according to yet another exemplary embodiment. As shown in Fig. 5, the preview image display method provided by this embodiment comprises the following steps:
S501: acquiring an image captured by a camera in a first duration.
S502: determining if the image captured by the camera in the first duration includes a human face.

If it is determined that the image captured by the camera in the first duration includes a human face, step S503 is executed. If it is determined that the image captured by the camera in the first duration does not include a human face, step S504 is executed.

S503: when the image captured by the camera in the second duration includes N human faces, selecting M of the N human faces that have relatively large areas as human faces to be amplified based on the areas of the human faces.

After S503, S505 is executed.

S504: displaying an image captured by the camera in the second duration as a preview image on the display screen.

After S504, S506 is executed.

S505: combining the M human faces to be amplified into one image, amplifying the human faces in the combined image, and displaying the amplified human faces as a preview image on the display screen.

In this embodiment, several human faces that have relatively larger areas are combined into one image, the M human faces in the combined image are amplified as a whole, and the amplified human faces are displayed as a preview image on the display screen.

S506: after the second duration ends, displaying an image captured by the camera in a third duration as a preview image on the display screen.

S507: after the third duration ends, returning to S501; and when receiving a shooting instruction, shooting an image captured by the camera according to the shooting instruction.

The method of this embodiment comprises: when the image captured by the camera in the second duration includes N human faces, selecting M of the N human faces that have relatively large areas as human faces to be amplified; combining the M human faces to be amplified into one image, amplifying the human faces in the combined image, and displaying the amplified human faces as a preview image on the display screen. When there are many human faces, if each face is amplified, it will take a long time. By applying the method of this embodiment, M human faces that have relatively large areas are combined and amplified as a whole each time, so that the preview image display manner is more flexible.

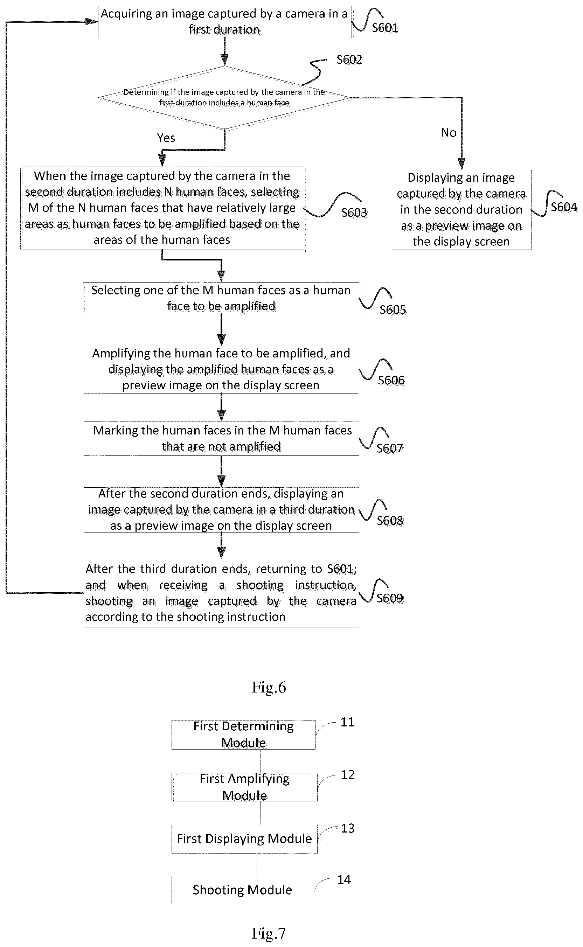

Fig. 6 is a flow chart showing a preview image display method according to yet another exemplary embodiment. As shown in Fig. 6, the preview image display method provided by this embodiment comprises the following steps:
S601: acquiring an image captured by a camera in a first duration.
S602: determining if the image captured by the camera in the first duration includes a human face.

If it is determined that the image captured by the camera in the first duration includes a human face, step S603 is executed. If it is determined that the image captured by the camera in the first duration does not include a human face, step S604 is executed.

S603: when the image captured by the camera in the second duration includes N human faces, selecting M of the N human faces that have relatively large areas based on the areas of the human faces.

After S603, S605 is executed.

S604: displaying an image captured by the camera in the second duration as a preview image on the display screen.

After S604, S608 is executed.

S605: selecting one of the M human faces as a human face to be amplified.

S606: amplifying the human face to be amplified, and displaying the amplified human faces as a preview image on the display screen.

S607: marking the human faces in the M human faces that are not amplified.

The purpose of marking is that the terminal device can select one human face from the remaining M-1 human faces that are not amplified according to the marking in the next amplification process. By using this manner, all the M human faces can be amplified through M cycles. In each amplification process, the terminal device will select and amplify a human face that is not amplified according to the marking.

S608: after the second duration ends, displaying an image captured by the camera in a third duration as a preview image on the display screen.

S609: after the third duration ends, returning to S601; and when receiving a shooting instruction, shooting an image captured by the camera according to the shooting instruction.

The method of this embodiment comprises: when the image captured by the camera in the second duration includes N human faces, selecting M of the N human faces that have relatively large areas as human faces to be amplified based on the areas of the human faces; selecting one of the M human faces as a human face to be amplified; amplifying the human face to be amplified, and displaying the amplified human faces as a preview image on the display screen; and marking the human faces in the M human faces that are not amplified, such that one human face is selected from the remaining M-1 human faces that are not amplified, and amplified according to the marking in the next amplification process. By applying the method of this embodiment, M humans in the image can clearly see the amplified details of their faces after M cycles.

Fig. 7 is a block view showing a preview image display apparatus according to an exemplary embodiment. The apparatus is applied to a terminal device. As shown in Fig. 7, the apparatus comprises: a first determining module 11, a first amplifying module 12, a first displaying module 13 and a shooting module 14.

The first determining module 11 is configured to determine that an image captured by a camera in a first duration includes a human face.

The first amplifying module 12 is configured to amplify a human face in an image captured by the camera in a second duration which is continuous with the first duration.

The first displaying module 13 is configured to display the human face image amplified by the first amplifying module 12 as a preview image on a display screen.

The shooting module 14 is configured to, when receiving a shooting instruction, shoot an image captured by the camera according to the shooting instruction.

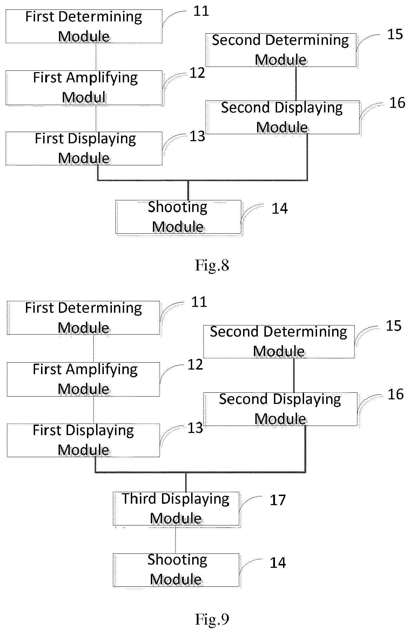

Fig. 8 is a block view showing a preview image display apparatus according to another exemplary embodiment. As shown in Fig. 8, the apparatus based on the apparatus shown in Fig. 7 further comprises: a second determining module 15 and a second displaying module 16.

The second determining module 15 is configured to determine that the image captured by the camera in the first duration does not include a human face.

The second displaying module 16 is configured to display the image captured by the camera in the second duration as a preview image on the display screen.

Fig. 9 is a block view showing a preview image display apparatus according to yet another exemplary embodiment. As shown in Fig. 9, the apparatus based on the apparatus shown in Fig. 8 further comprises: a third displaying module 17.

The third displaying module 17 is configured to, after the second duration ends, display an image captured by the camera in a third duration as a preview image on the display screen, the third duration being continuous with the second duration.

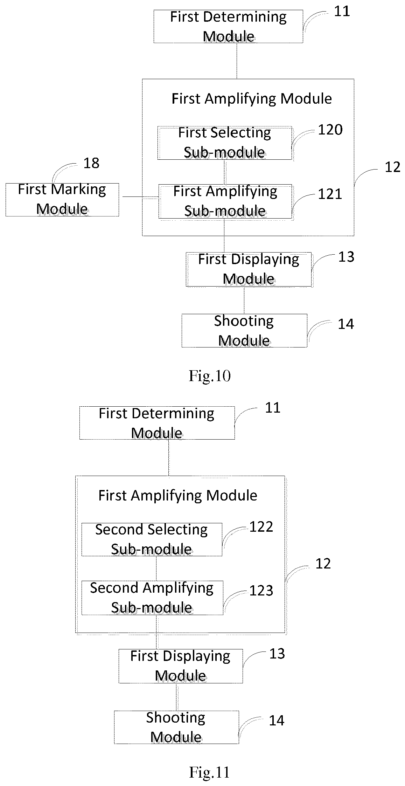

Fig. 10 is a block view showing a preview image display apparatus according to yet another exemplary embodiment. In this embodiment, the image captured by the camera in the second duration includes N human faces, N being a positive integer greater than or equal to 2. As shown in Fig. 10, the apparatus is based on the apparatus shown in Fig. 7, wherein the first amplifying module 12 comprises:
a first selecting sub-module 120 configured to select one of the N human faces as a human face to be amplified; and
a first amplifying sub-module 121 configured to amplify the human face to be amplified and selected by the first selecting sub-module;
wherein the apparatus further comprises:
   a first marking module 18 configured to mark the human faces in the N human faces that are not amplified, such that one human face is selected from the remaining N-1 human faces that are not amplified, and amplified according to the marking in the next amplification process.

Fig. 11 is a block view showing a preview image display apparatus according to yet another exemplary embodiment. In this embodiment, the image captured by the camera in the second duration includes N human faces, N being a positive integer greater than or equal to 2. As shown in Fig. 11, the apparatus is based on the apparatus shown in Fig. 7, wherein the first amplifying module 12 comprises:
a second selecting sub-module 122 configured to select one of the N human faces that has the largest area as a human face to be amplified; and
a second amplifying sub-module 123 configured to amplify the human face to be amplified and selected by the second selecting sub-module 122.

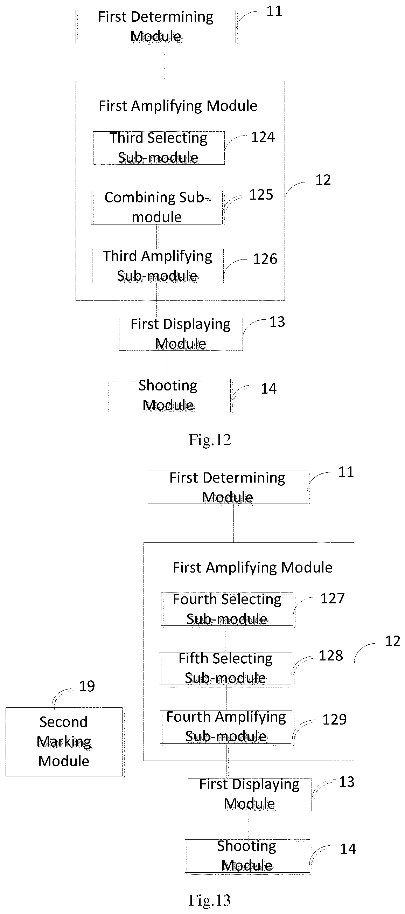

Fig. 12 is a block view showing a preview image display apparatus according to yet another exemplary embodiment. In this embodiment, the image captured by the camera in the second duration includes N human faces, N being a positive integer greater than or equal to 2. As shown in Fig. 12, the apparatus is based on the apparatus shown in Fig. 7, wherein the first amplifying module 12 comprises:
a third selecting sub-module 124 configured to select M of the N human faces that have relatively large areas as human faces to be amplified based on the areas of the human faces;
a combining sub-module 125 configured to combine the M human faces to be amplified into one image; and
a third amplifying sub-module 126 configured to amplify the human faces in the image combined by the combining sub-module 125.

Fig. 13 is a block view showing a preview image display apparatus according to yet another exemplary embodiment. In this embodiment, the image captured by the camera in the second duration includes N human faces, N being a positive integer greater than or equal to 2. As shown in Fig. 13, the apparatus is based on the apparatus shown in Fig. 7, wherein the first amplifying module 12 comprises:
a fourth selecting sub-module 127 configured to select M of the N human faces that have relatively large areas based on the areas of the human faces;
a fifth selecting sub-module 128 configured to select one of the M human faces as a human face to be amplified;
a fourth amplifying sub-module 129 configured to amplify the human face to be amplified and selected by the fifth selecting sub-module 128;
wherein the apparatus further comprises:
   a second marking module 19 configured to mark the human faces in the M human faces that are not amplified, such that one human face is selected from the remaining M-1 human faces that are not amplified, and amplified according to the marking in the next amplification process.

With respect to the preview image display apparatus in the above embodiments, the specific manners for performing operations for individual modules therein have been described in detail in the embodiments regarding the steps of the preview image display method, which will not be elaborated herein.

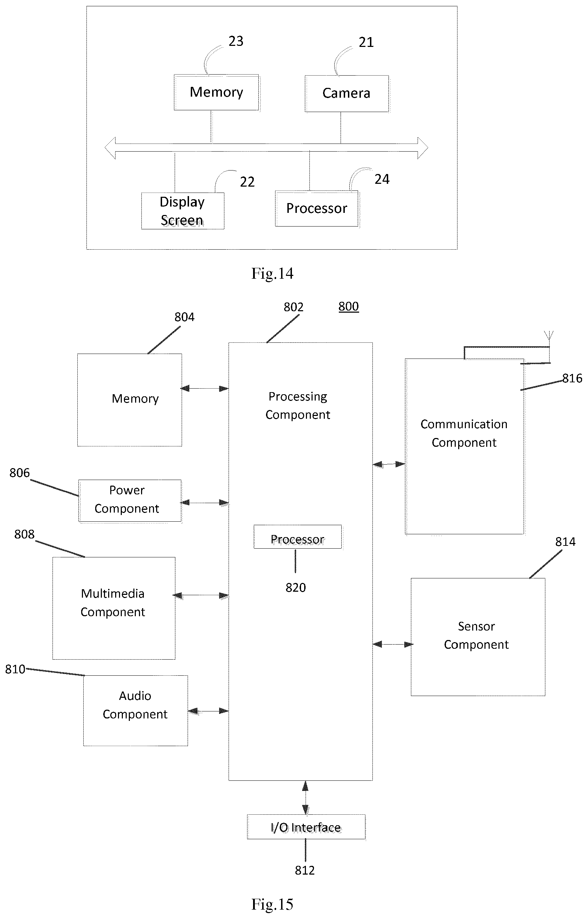

Fig. 14 is a block view showing a terminal device according to an exemplary embodiment. As shown in Fig. 14, the terminal device 200 comprises: a camera 21, a display screen 22, a memory 23 and a processor 24, wherein the memory 23 is configured to store instruction executable by the processor 24, the camera 21, the display screen 22 and the memory 23 are connected to and communicate with the processor 24 via a system bus.

The processor 24 is configured to:
determine that an image captured by the camera 21 in a first duration includes a human face;
amplify a human face in an image captured by the camera 21 in a second duration which is continuous with the first duration, and display the amplified human face image as a preview image on the display screen 22; and
when receiving a shooting instruction, shoot an image captured by the camera according to the shooting instruction.

In the embodiments of the above terminal device, it should be understood that the processor may be a central processing unit (CPU), a general processor, a digital signal processor (DSP), an application specific integrated circuit (ASIC) or the like. The general processor may be a microprocessor or any one of a conventional processor. The memory may be a read-only memory (ROM), a random access memory (RAM), a flash memory, a hard disc or a solid-state hard disc. The steps of the methods disclosed by the embodiments of this invention may be executed by a hardware processor or by a combination of hardware and software modules of the processor.

Fig. 15 is a block view showing a terminal device according to another exemplary embodiment. For example, the terminal device 800 may be provided as a mobile phone, a computer, a digital broadcasting device, a messaging device, a game console, a tablet, a medical device, a fitness equipment, a personal digital assistant or the like.

Referring to Fig. 15, the terminal device 800 may further comprise one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of theterminal device 800, such as the operations associated with display, telephone calls, data communications, camera operations, and recording operations. The processing component 802 may include one or more processors 1618 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of theterminal device 800. Examples of such data include instructions for any applications or methods operated on the terminal device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of theterminal device 800. The power component 806 may include a power supplymanagement system, one or more power sources, and any other components associated with the generation, management, and distribution of power in theterminal device 800.

The multimedia component 808 includes a screen providing an output interface between theterminal device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while theterminal device 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includesa microphone (MIC) configured to receive an external audio signal when theterminal device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors to provide status assessments of various aspects of the terminal device 800. For instance, the sensor component 814 may detect an open/closed status of the terminal device 800, relative positioning of components, e.g., the display and the keypad, of the terminal device 800, a change in position of the terminal device 800 or a component of the terminal device 800, a presence or absence of user contact with the terminal device 800, an orientation or an acceleration/deceleration of the terminal device 800, and a change in temperature of theterminal device 800. The sensor component 814 may include a proximity sensor configured to detect the presence of nearby objects without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between theterminal device 800 and other devices. Theterminal device 800 can access a wireless network based on a communication standard, such as WiFi, 2G, or 3G, or a combination thereof. In one exemplary embodiment, the communication component 816receives a broadcast signal or broadcast associated information from an external broadcast management system via a broadcast channel. In one exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, theterminal device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods shown in the embodiments in Figs. 1-6.

The exemplary embodiments also provides a non-volatile computer-readable storage medium containing instructions, such as the memory 804 containing instructions which may be executed by the processing component 820 of the terminal device 800 to perform the above methods shown in the embodiments in Figs. 1-6. For example, the non-volatile computer-readable storage medium may be a ROM, a RAM, a CD-ROM, a tape, a floppy disc, an optical data storage device or the like.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A preview image display method, comprising:
detecting that a selfie stick is connected to a camera, and
upon detecting that the selfie stick is connected to the camera, the method further comprises:
determining (S101) that an image captured by the camera in a first duration includes a human face;
amplifying (SI02) the human face in the image captured by the camera in a second duration which is consecutive to the first duration; automatically and alternately displaying the amplified human face image and the captured image as a preview image on a display screen; and
upon receiving a shooting instruction (S103) from the selfie stick, shooting an image captured by the camera according to the shooting instruction, wherein the image captured by the camera is an image in which the human face is not amplified.

2. The method according to claim 1, wherein the method further comprises:
determining (S202) that the image captured by the camera in the first duration does not include a human face; and
displaying (S204) the image captured by the camera in the second duration as a preview image on the display screen.

3. The method according to claim 1 or 2, wherein before shooting an image captured by the camera according to the shooting instruction, the method further comprises:
after the second duration ends, displaying (S205) an image captured by the camera in a third duration as a preview image on the display screen, the third duration being consecutive to the second duration.

4. The method according to claim 1, 2 or 3, wherein when the image captured by the camera in the second duration includes N human faces, N being a positive integer greater than or equal to 2, said step of amplifying a human face in an image captured by the camera in a second duration comprises:
selecting (S303) one of the N human faces as a human face to be amplified; and
amplifying (S305) the human face to be amplified;
wherein the method further comprises:
marking (S306) the human faces in the N human faces that are not amplified, such that one human face is selected from the remaining N-1 human faces that are not amplified, and amplified according to the marking in the next amplification process.

5. The method according to claim 1, 2 or 3, wherein when the image captured by the camera in the second duration includes N human faces, N being a positive integer greater than or equal to 2, said step of amplifying a human face in an image captured by the camera in a second duration comprises:
selecting (S403) one of the N human faces that has the largest area as a human face to be amplified; and
amplifying (S405) the human face to be amplified.

6. The method according to claim 1, 2 or 3, wherein when the image captured by the camera in the second duration includes N human faces, N being a positive integer greater than or equal to 2, said step of amplifying a human face in an image captured by the camera in a second duration comprises:
Selecting (S503) M of the N human faces that have relatively large areas as human faces to be amplified based on the areas of the human faces;
combining (S505) the M human faces to be amplified into one image, and amplifying the human faces in the combined image.

7. The method according to claim 1, 2 or 3, wherein when the image captured by the camera in the second duration includes N human faces, N being a positive integer greater than or equal to 2, said step of amplifying a human face in an image captured by the camera in a second duration comprises:
selecting (S603) M of the N human faces that have relatively large areas based on the areas of the human faces;
selecting (S605) one of the M human faces as a human face to be amplified; and
amplifying (S606) the human face to be amplified;
wherein the method further comprises:
marking (S607) the human faces in the M human faces that are not amplified, such that one human face is selected from the remaining M-1 human faces that are not amplified, and amplified according to the marking in the next amplification process.

8. A preview image display apparatus, comprising:
a first determining module (11) configured to, detect that a selfie stick is connected to a camera, and upon detecting that the selfie stick is connected to the camera, determine that an image captured by the camera in a first duration includes a human face;
a first amplifying module (12) configured to amplify the human face in the image captured by the camera in a second duration which is consecutive to the first duration;
a first displaying module (13) configured to automatically and alternately display the human face image amplified by the first amplifying module and the captured image determined by the first determining module as a preview image on a display screen; and
a shooting module (14) configured to, when receiving a shooting instruction from the selfie stick, shoot an image captured by the camera according to the shooting instruction, wherein the image captured by the camera is an image in which the human face is not amplified.

9. The apparatus according to claim 8, further comprising:
a second determining module (15) configured to determine that the image captured by the camera in the first duration does not include a human face; and
a second displaying module (16) configured to display the image captured by the camera in the second duration as a preview image on the display screen.

10. The apparatus according to claim 8 or 9, further comprising: a third displaying module (17) configured to, after the second duration ends, display an image captured by the camera in a third duration as a preview image on the display screen, the third duration being consecutive to the second duration.

11. The apparatus according to claim 8, 9 or 10, wherein, when the image captured by the camera in the second duration includes N human faces, N being a positive integer greater than or equal to 2, the first amplifying module comprises:
a first selecting sub-module (120) configured to select one of the N human faces as a human face to be amplified; and
a first amplifying sub-module (121) configured to amplify the human face to be amplified and selected by the first selecting sub-module;
wherein the apparatus further comprises:
a first marking module (18) configured to mark the human faces in the N human faces that are not amplified, such that one human face is selected from the remaining N-1 human faces that are not amplified, and amplified according to the marking in the next amplification process.

12. The apparatus according to claim 8, 9 or 10, wherein, when the image captured by the camera in the second duration includes N human faces, N being a positive integer greater than or equal to 2, the first amplifying module comprises:
a second selecting sub-module (122) configured to select one of the N human faces that has the largest area as a human face to be amplified; and
a second amplifying sub-module (123) configured to amplify the human face to be amplified and selected by the second selecting sub-module.

13. The apparatus according to claim 8, 9 or 10, wherein, when the image captured by the camera in the second duration includes N human faces, N being a positive integer greater than or equal to 2, the first amplifying module comprises:
a third selecting sub-module (124) configured to select M of the N human faces that have relatively large areas as human faces to be amplified based on the areas of the human faces;
a combining sub-module (125) configured to combine the M human faces to be amplified into one image; and
a third amplifying sub-module (126) configured to amplify the human faces in the image combined by the combining sub-module.

14. A computer program including instructions to cause the preview image display apparatus of claims 8-13 to execute the preview image display method of any of claims 1 to 7.

15. A recording medium readable by a computer and having recorded thereon the computer program of claim 14.

## Patentansprüche

1. Verfahren zum Anzeigen eines Voransichtsbildes, das Folgendes beinhaltet:
Erkennen, dass ein Selfie-Stick mit einer Kamera verbunden ist, wobei das Verfahren nach dem Erkennen, dass das Selfie-Stick mit der Kamera verbunden ist, ferner Folgendes beinhaltet:
Feststellen (S101), dass ein von der Kamera in einer ersten Zeitspanne aufgenommenes Bild ein menschliches Gesicht beinhaltet;
Verstärken (S102) des menschlichen Gesichts in dem von der Kamera aufgenommenen Bild in einer zweiten Zeitspanne, die auf die erste Zeitspanne folgt;
automatisches und abwechselndes Anzeigen des verstärkten menschlichen Gesichtsbildes und des aufgenommenen Bildes als Voransichtsbild auf einem Anzeigeschirm; und
Schießen, nach Empfang eines Schießbefehls (S103) von dem Selfie-Stick, eines von der Kamera aufgenommenen Bildes gemäß dem Schießbefehl, wobei das von der Kamera aufgenommene Bild ein Bild ist, in dem das menschliche Gesicht nicht verstärkt ist.

2. Verfahren nach Anspruch 1, wobei das Verfahren ferner Folgendes beinhaltet:
Feststellen (S202), dass das von der Kamera in der ersten Zeitspanne aufgenommene Bild kein menschliches Gesicht beinhaltet; und
Anzeigen (S204) des von der Kamera in der zweiten Zeitspanne aufgenommenen Bildes als Voransichtsbild auf dem Anzeigeschirm.

3. Verfahren nach Anspruch 1 oder 2, wobei das Verfahren vor dem Schießen eines von der Kamera aufgenommenen Bildes gemäß dem Schießbefehl ferner Folgendes beinhaltet:
Anzeigen (S205), nach Ende der zweiten Zeitspanne, eines von der Kamera aufgenommenen Bildes in einer dritten Zeitspanne als Voransichtsbild auf dem Anzeigeschirm, wobei die dritte Zeitspanne auf die zweite Zeitspanne folgt.

4. Verfahren nach Anspruch 1, 2 oder 3, wobei, wenn das von der Kamera aufgenommene Bild in der zweiten Zeitspanne N menschliche Gesichter beinhaltet, wobei N eine positive ganze Zahl gleich oder größer als 2 ist, der genannte Schritt des Verstärkens eines menschlichen Gesichts in einem von der Kamera aufgenommenen Bild in einer zweiten Zeitspanne Folgendes beinhaltet:
Auswählen (S303) eines der N menschlichen Gesichter als ein zu verstärkendes menschliches Gesicht; und
Verstärken (S305) des zu verstärkenden menschlichen Gesichts;
wobei das Verfahren ferner Folgendes beinhaltet:
Markieren (S306) der menschlichen Gesichter in den N menschlichen Gesichtern, die nicht verstärkt sind, so dass ein menschliches Gesicht aus den übrigen N-1 menschlichen Gesichtern, die nicht verstärkt sind, ausgewählt und gemäß der Markierung im nächsten Verstärkungsprozess verstärkt wird.

5. Verfahren nach Anspruch 1, 2 oder 3, wobei, wenn das von der Kamera in der zweiten Zeitspanne aufgenommene Bild N menschliche Gesichter beinhaltet, wobei N eine positive ganze Zahl gleich oder größer als 2 ist, der genannte Schritt des Verstärkens eines menschlichen Gesichts in einem von der Kamera in der zweiten Zeitspanne aufgenommenen Bild Folgendes beinhaltet:
Auswählen (S403) eines der N menschlichen Gesichter, das die größte Fläche hat, als ein zu verstärkendes menschliches Gesicht; und
Verstärken (S405) des zu verstärkenden menschlichen Gesichts.

6. Verfahren nach Anspruch 1, 2 oder 3, wobei, wenn das von der Kamera in der zweiten Zeitspanne aufgenommene Bild N menschliche Gesichter beinhaltet, wobei N eine positive ganze Zahl gleich oder größer als 2 ist, der genannte Schritt des Verstärkens eines menschlichen Gesichts in einem von der Kamera in einer zweiten Zeitspanne aufgenommenen Bild Folgendes beinhaltet:
Auswählen (S503) von M der N menschlichen Gesichter, die relativ große Flächen haben, als zu verstärkende menschliche Gesichter, auf der Basis der Flächen der menschlichen Gesichter;
Kombinieren (S505) der zu verstärkenden M menschlichen Gesichter zu einem Bild und Verstärken der menschlichen Gesichter in dem kombinierten Bild.

7. Verfahren nach Anspruch 1, 2 oder 3, wobei, wenn das von der Kamera aufgenommene Bild in der zweiten Zeitspanne N menschliche Gesichter beinhaltet, wobei N eine positive ganze Zahl gleich oder größer als 2 ist, der genannte Schritt des Verstärkens eines menschlichen Gesichts in einem von der Kamera aufgenommenen Bild in einer zweiten Zeitspanne Folgendes beinhaltet:
Auswählen (S603) von M der N menschlichen Gesichter, die relativ große Flächen haben, auf der Basis der Flächen der menschlichen Gesichter;
Auswählen (S605) von einem der M menschlichen Gesichter als ein zu verstärkendes menschliches Gesicht; und
Verstärken (S606) des zu verstärkenden menschlichen Gesichts;
wobei das Verfahren ferner Folgendes beinhaltet:
Markieren (S607) der menschlichen Gesichter in den N menschlichen Gesichtern, die nicht verstärkt sind, so dass ein menschliches Gesicht aus den übrigen N-1 menschlichen Gesichtern, die nicht verstärkt sind, ausgewählt und gemäß der Markierung im nächsten Verstärkungsprozess verstärkt wird.

8. Vorrichtung zum Anzeigen eines Voransichtsbildes, die Folgendes umfasst:
ein erstes Feststellungsmodul (11), konfiguriert zum Erkennen, dass ein Selfie-Stick mit einer Kamera verbunden ist, und Feststellen, nach dem Erkennen, dass das Selfie-Stick mit der Kamera verbunden ist, dass ein von der Kamera in der ersten Zeitspanne aufgenommenes Bild ein menschliches Gesicht beinhaltet;
ein erstes Verstärkungsmodul (12), konfiguriert zum Verstärken des menschlichen Gesichts in dem Bild, das von der Kamera in einer zweiten Zeitspanne aufgenommen wurde, die auf die erste Zeitspanne folgt;
ein erstes Anzeigemodul (13), konfiguriert zum automatischen und abwechselnden Anzeigen des vom ersten Verstärkungsmodul verstärkten menschlichen Gesichtsbildes und des vom ersten Feststellungsmodul bestimmten aufgenommenen Bildes als ein Voransichtsbild auf einem Anzeigeschirm; und
ein Schießmodul (14), konfiguriert zum Schießen, nach dem Empfang eines Schießbefehls von dem Selfie-Stick, eines von der Kamera aufgenommenen Bildes gemäß dem Schießbefehl, wenn das von der Kamera aufgenommene Bild ein Bild ist, in dem das menschliche Gesicht nicht verstärkt ist.

9. Vorrichtung nach Anspruch 8, die ferner Folgendes umfasst:
ein zweites Feststellungsmodul (15), konfiguriert zum Feststellen, dass das von der Kamera in der ersten Zeitspanne aufgenommene Bild kein menschliches Gesicht beinhaltet; und
ein zweites Anzeigemodul (16), konfiguriert zum Anzeigen des von der Kamera in der zweiten Zeitspanne aufgenommenen Bildes als Voransichtsbild auf dem Anzeigeschirm.

10. Vorrichtung nach Anspruch 8 oder 9, die ferner Folgendes umfasst:
ein drittes Anzeigemodul (17), konfiguriert zum Anzeigen, nach dem Ende der zweiten Zeitspanne, eines von der Kamera in einer dritten Zeitspanne aufgenommenen Bildes als ein Voransichtsbild auf dem Anzeigeschirm, wobei die dritte Zeitspanne auf die zweite Zeitspanne folgt.

11. Vorrichtung nach Anspruch 8, 9 oder 10, wobei, wenn das von der Kamera in der zweiten Zeitspanne aufgenommene Bild N menschliche Gesichter beinhaltet, wobei N eine positive ganze Zahl gleich oder größer als 2 ist, das erste Verstärkungsmodul Folgendes umfasst:
ein erstes Auswahlsubmodul (120), konfiguiert zum Auswählen von einem der N menschlichen Gesichter als ein zu verstärkendes menschliches Gesicht; und
ein erstes Verstärkungssubmodul (121), konfiguriert zum Verstärken des zu verstärkenden und vom ersten Auswahlsubmodul ausgewählten menschlichen Gesichts;
wobei die Vorrichtung ferner Folgendes umfasst:
ein erstes Markierungsmodul (18), konfiguriert zum Markieren der menschlichen Gesichter in den N menschlichen Gesichtern, die nicht verstärkt sind, so dass ein menschliches Gesicht aus den übrigen N-1 menschlichen Gesichtern, die nicht verstärkt sind, ausgewählt und gemäß der Markierung im nächsten Verstärkungsprozess verstärkt wird.

12. Vorrichtung nach Anspruch 8, 9 oder 10, wobei, wenn das von der Kamera in der zweiten Zeitspanne aufgenommene Bild N menschliche Gesichter beinhaltet, wobei N eine positive ganze Zahl gleich oder größer als 2 ist, das erste Verstärkungsmodul Folgendes umfasst:
ein zweites Auswahlsubmodul (122), konfiguriert zum Auswählen von einem der N menschlichen Gesichter, das die größte Fläche hat, als ein zu verstärkendes menschliches Gesicht; und
ein zweites Verstärkungssubmodul (123), konfiguriert zum Verstärken des zu verstärkenden und vom zweiten Auswahlsubmodul ausgewählten menschlichen Gesichts.

13. Vorrichtung nach Anspruch 8, 9 oder 10, wobei, wenn das von der Kamera in der zweiten Zeitspanne aufgenommene Bild N menschliche Gesichter beinhaltet, wobei N eine positive ganze Zahl gleich oder größer als 2 ist, das erste Verstärkungsmodul Folgendes umfasst:
ein drittes Auswahlsubmodul (124), konfiguriert zum Auswählen von M der N menschlichen Gesichter, die relativ große Flächen haben, als zu verstärkende menschliche Gesichter, auf der Basis der Flächen der menschlichen Gesichter;
ein Kombinationssubmodul (125), konfiguriert zum Kombinieren der M zu verstärkenden menschlichen Gesichter zu einem Bild; und
ein drittes Verstärkungssubmodul (126), konfiguriert zum Verstärken der menschlichen Gesichter in dem von dem Kombinationssubmodul kombinierten Bild.

14. Computerprogramm mit Befehlen zum Bewirken, dass die Vorrichtung zum Anzeigen eines Voransichtsbildes nach den Ansprüchen 8-13 das Verfahren zum Anzeigen eines Voransichtsbildes nach einem der Ansprüche 1 bis 7 durchführt.

15. Aufzeichnungsmedium, das von einem Computer gelesen werden kann und auf dem das Computerprogramm von Anspruch 14 aufgezeichnet ist.

## Revendications

1. Procédé d'affichage d'image de prévisualisation, comprenant :
détecter qu'une perche à autoportrait est connectée à une caméra, et
lors de la détection que la perche à autoportrait est connectée à la caméra, le procédé comprend en outre :
déterminer (S101) qu'une image saisie par la caméra pendant une première durée comprend un visage humain ;
amplifier (S102) le visage humain dans l'image saisie par la caméra pendant une deuxième durée qui est consécutive à la première durée ; afficher automatiquement et alternativement l'image du visage humain amplifié et l'image saisie comme une image de prévisualisation sur un écran d'affichage ; et
à la réception d'une instruction de prise de photo (S103) de la perche à autoportrait, prendre une photo d'une image saisie par la caméra conformément à l'instruction de prise de photo, où l'image saisie par la caméra est une image sur laquelle le visage humain n'est pas amplifié.

2. Procédé selon la revendication 1, où le procédé comprend en outre :
déterminer (S202) que l'image saisie par la caméra pendant la première durée ne comprend pas de visage humain ; et
afficher (S204) l'image saisie par la caméra pendant la deuxième durée comme une image de prévisualisation sur l'écran d'affichage.

3. Procédé selon la revendication 1 ou 2, dans lequel avant de prendre une photo d'une image saisie par la caméra conformément à l'instruction de prise de photo, le procédé comprend en outre :
après que la deuxième durée s'est terminée, afficher (S205) une image saisie par la caméra pendant une troisième durée comme une image de prévisualisation sur l'écran d'affichage, la troisième durée étant consécutive à la deuxième durée.

4. Procédé selon la revendication 1, 2 ou 3, dans lequel l'image saisie par la caméra pendant la deuxième durée comprend N visages humains, N étant un nombre entier positif plus grand que ou égal à 2, ladite étape d'amplification d'un visage humain dans une image saisie par la caméra pendant une deuxième durée comprend :
sélectionner (S303) l'un des N visages humains comme un visage humain à amplifier ; et
amplifier (S305) le visage humain à amplifier ;
où le procédé comprend en outre :
marquer (S306) les visages humains dans les N visages humains qui ne sont pas amplifiés, de telle sorte qu'un visage humain est sélectionné parmi les N-1 visages humains restants qui ne sont pas amplifiés, et amplifié conformément au marquage lors du processus d'amplification suivant.

5. Procédé selon la revendication 1, 2 ou 3, dans lequel l'image saisie par la caméra pendant la deuxième durée comprend N visages humains, N étant un nombre entier positif plus grand que ou égal à 2, ladite étape d'amplification d'un visage humain dans une image saisie par la caméra pendant une deuxième durée comprend :
sélectionner (S403) l'un des N visages humains qui a la plus grande surface comme un visage humain à amplifier ; et
amplifier (S405) le visage humain à amplifier.

6. Procédé selon la revendication 1, 2 ou 3, dans lequel l'image saisie par la caméra pendant la deuxième durée comprend N visages humains, N étant un nombre entier positif plus grand que ou égal à 2, ladite étape d'amplification d'un visage humain d'une image saisie par la caméra pendant une deuxième durée comprend :
sélectionner (S503) M des N visages humains qui ont des surfaces relativement grandes comme des visages humains à amplifier sur la base des surfaces des visages humains ;
combiner (S505) les M visages humains à amplifier dans une image et amplifier les visages humains dans l'image combinée.

7. Procédé selon la revendication 1, 2 ou 3, dans lequel l'image saisie par la caméra pendant la deuxième durée comprend N visages humains, N étant un nombre entier positif plus grand que ou égal à 2, ladite étape d'amplification d'un visage humain dans une image saisie par la caméra pendant une deuxième durée comprend :
sélectionner (S603) M des N visages humains qui ont des surfaces relativement grandes sur la base des surfaces des visages humains ;
sélectionner (S605) l'un des M visages humains comme un visage humain à amplifier ; et
amplifier (S606) le visage humain à amplifier ;
où le procédé comprend en outre :
marquer (S607) les visages humains dans les M visages humains qui ne sont pas amplifiés, de telle sorte qu'un visage humain est sélectionné parmi les M-1 visages humains restants qui ne sont pas amplifiés, et amplifié conformément au marquage lors du processus d'amplification suivant.

8. Appareil d'affichage d'image de prévisualisation comprenant :
un premier module de détermination (11) configuré pour détecter qu'une perche à autoportrait est connectée à une caméra, et lors de la détection que la perche à autoportrait est connectée à la caméra, déterminer qu'une image saisie par la caméra pendant une première durée comprend un visage humain ;
un premier module d'amplification (12) configuré pour amplifier le visage humain dans l'image saisie par la caméra pendant une deuxième durée qui est consécutive à la première durée ;
un premier module d'affichage (13) configuré pour afficher automatiquement et alternativement l'image du visage humain amplifié par le premier module d'amplification et l'image saisie déterminée par le premier module de détermination comme une image de prévisualisation sur un écran d'affichage ; et
un module de prise de photo (14) configuré pour, en recevant une instruction de prise de photo de la perche à autoportrait, prendre une photo d'une image saisie par la caméra conformément à l'instruction de prise de photo, où l'image saisie par la caméra est une image sur laquelle le visage humain n'est pas amplifié.

9. Appareil selon la revendication 8, comprenant en outre :
un deuxième module de détermination (15) configuré pour déterminer que l'image saisie par la caméra pendant la première durée ne comprend pas de visage humain ; et
un deuxième module d'affichage (16) configuré pour afficher l'image saisie par la caméra pendant la deuxième durée comme une image de prévisualisation sur l'écran d'affichage.

10. Appareil selon la revendication 8 ou 9, comprenant en outre : un troisième module d'affichage (17) configuré pour, après que la deuxième durée s'est terminée, afficher une image saisie par la caméra pendant une troisième durée comme une image de prévisualisation sur l'écran d'affichage, la troisième durée étant consécutive à la deuxième durée.

11. Appareil selon la revendication 8, 9 ou 10 dans lequel, lorsque l'image saisie par la caméra pendant la deuxième durée comprend N visages humains, N étant un nombre entier positif plus grand que ou égal à 2, le premier module d'amplification comprend :
un premier sous-module de sélection (120) configuré pour sélectionner l'un des N visages humains comme un visage humain à amplifier ; et
un premier sous-module d'amplification (121) configuré pour amplifier le visage humain à amplifier et sélectionné par le premier sous-module de sélection ;
où l'appareil comprend en outre :
un premier module de marquage (18) configuré pour marquer les visages humains dans les N visages humains qui ne sont pas amplifiés, de telle sorte qu'un visage humain est sélectionné parmi les N-1 visages humains restants qui ne sont pas amplifiés, et amplifié conformément au marquage lors du processus d'amplification suivant.

12. Appareil selon la revendication 8, 9 ou 10, dans lequel, lorsque l'image saisie par la caméra pendant la deuxième durée comprend N visages humains, N étant un nombre entier positif plus grand que ou égal à 2, le premier module d'amplification comprend :
un deuxième sous-module de sélection (122) configuré pour sélectionner l'un des N visages humains qui a la plus grande surface comme un visage humain à amplifié ; et
un deuxième sous-module d'amplification (123) configuré pour amplifier le visage humain à amplifier et sélectionné par le deuxième sous-module de sélection.

13. Appareil selon la revendication 8, 9 ou 10, dans lequel, lorsque l'image saisie par la caméra pendant la deuxième durée comprend N visages humains, N étant un nombre entier positif plus grand que ou égal à 2, le premier module d'amplification comprend :
un troisième sous-module de sélection (124) configuré pour sélectionner M des N visages humains qui ont des surfaces relativement grandes comme des visages humains à amplifier sur la base des surfaces des visages humains ;
un sous-module de combinaison (125) configuré pour combiner les M visages humains à amplifier en une image ; et
un troisième sous-module d'amplification (126) configuré pour amplifier les visages humains dans l'image combinée par le sous-module de combinaison.

14. Programme informatique comprenant des instructions pour faire que l'appareil d'affichage d'image de prévisualisation selon les revendications 8-13 exécute le procédé d'affichage d'image de prévisualisation selon l'une quelconque des revendications 1 à 7.

15. Support d'enregistrement lisible par un ordinateur ayant le programme informatique selon la revendication 14 enregistré dessus.
